# EUROPEAN PATENT SPECIFICATION

(11) **EP 2 225 292 B1**
(45) Date of publication and mention of the grant of the patent: **09.01.2013**
(21) Application number: 08770579.4
(22) Date of filing: 10.06.2008
(51) Int. Cl.: C08F 26/00, C09D 201/02

(54) **A DISPERSANT FOR USE IN A FLUOROCARBON COATING COMPOSITION**
DISPERGIERMITTEL ZUR VERWENDUNG IN EINER FLUORKOHLENSTOFF-BESCHICHTUNGSZUSAMMENSETZUNG
AGENT DISPERSANT POUR UNE UTILISATION DANS UNE COMPOSITION DE REVÊTEMENT FLUOROCARBONÉE

(30) Priority: 20.12.2007 US 960808
(43) Date of publication of application: 08.09.2010
(73) Proprietor: BASF Coatings GmbH, 48165 Münster (DE)
(72) Inventor: LINDOW, David E., Farmington Hills, Michigan 48334 (US); MORMILE, Patrick J., Birmingham, Michigan 48009 (US)
(74) Representative: Leifert & Steffan
(86) International application number: PCT/US2008/066412
(87) International publication number: WO 2009/082503

(56) References cited:
- WO-A-00/26308
- WO-A-2007/092663
- DE-A1-102005 039 537

## Description

### RELATED APPLICATIONS

This patent application claims priority to and all advantages of United States Patent Application No. 11/275,916, which was filed on February 3, 2006.

### BACKGROUND OF THE INVENTION

### 1. Field of the Invention

The subject invention generally relates to a dispersant and a fluorocarbon coating composition. More specifically, the subject invention relates to a dispersant that aids in dispersion of fluorocarbon resins in the fluorocarbon coating composition.

### 2. Description of the Related Art

Coating compositions are typically applied to a substrate to provide the substrate with certain functional and aesthetic qualities, such as color, appearance, and protection. Coating compositions typically include resins, cross-linking agents reactive with the resins, and pigments for imparting color to cured films formed from the coating compositions. One type of coating composition, a fluorocarbon coating composition, typically includes a fluorocarbon resin such as polyvinylidene fluoride (PVDF) and is useful for applications requiring excellent weather resistance and durability.

Fluorocarbon resins typically have poor rheology and pigment wetting characteristics. That is, fluorocarbon resins and pigments typically do not adequately disperse in fluorocarbon coating compositions. Therefore, it is common to add dispersants to fluorocarbon coating compositions to aid in dispersion of fluorocarbon resins.

One type of dispersant that has previously been added to fluorocarbon coating compositions is an acrylic resin. Acrylic resins typically provide fluorocarbon coating compositions with excellent pigment wetting characteristics. Some existing fluorocarbon coating compositions include acrylic resins that have been manipulated during polymerization. For example, some existing dispersants have been polymerized from acrylic acids and acrylic esters having additional functionality to provide dispersants with cross-linking sites. Some existing dispersants have also been polymerized with an acryloxyalkyl oxazolidine to optimize the pigment wetting characteristics of the dispersants. One specific acryloxyalkyl oxazolidine that has been previously utilized is 3-(2-methacryloxyethyl)-2,2-spirocyclohexyl oxazolidine (MESO). However, MESO is becoming increasingly difficult and/or expensive to obtain due to high manufacturing costs.

To achieve excellent weathering and chemical resistance for cured films formed from fluorocarbon coating compositions, high fluorocarbon resin content is typically desired in the fluorocarbon coating compositions. Many coating applications call for fluorocarbon coating compositions having at least 70 parts by weight of fluorocarbon resin based on 100 parts by weight of the fluorocarbon coating composition. Such high fluorocarbon resin content contributes to relatively high viscosity of the fluorocarbon coating composition since fluorocarbon resins typically have poor pigment wetting characteristics and often do not adequately disperse in fluorocarbon coating compositions. Fluorocarbon coating compositions having relatively high viscosities are not optimal for applications requiring automated coating processes and uniform film thickness. Therefore, for some coating applications, particularly coil coating applications, it is desirable to have high fluorocarbon resin content and lower viscosity than is currently possible with existing fluorocarbon coating compositions.

Attempts to lower viscosity of fluorocarbon coating compositions have included polymerizing and/or reacting the dispersant with polyimides, primary and secondary substituted amino groups, epoxy groups, and the like to form modified dispersants. However, these modified dispersants do not wet pigments or lower viscosity as well as dispersants modified with MESO.

Due to the inadequacies of existing dispersants, there remains an opportunity to provide a dispersant which improves upon existing dispersants.

### SUMMARY OF THE INVENTION AND ADVANTAGES

The subject invention provides a dispersant for use in a fluorocarbon coating compositions. The dispersant comprises a reaction product of a non-functional acrylic monomer, an amino-functional vinyl monomer, and a hydroxy-functional acrylic monomer. The dispersant has amine functionality from the amino-functional vinyl monomer to aid in dispersion of fluorocarbon resins in the fluorocarbon coating composition. The dispersant also has hydroxyl functionality from the hydroxy-functional acrylic monomer to enhance cross-linking with cross-linking agents in the fluorocarbon coating composition.

The subject invention also provides the fluorocarbon coating composition comprising a fluorocarbon resin, the dispersant, and a cross-linking agent reactive with the dispersant. A fluorocarbon coating system comprising a substrate and the fluorocarbon coating composition disposed on the substrate is also provided.

The dispersant allows for a desired fluorocarbon resin content of the fluorocarbon coating composition while providing desired viscosity and pigment wetting characteristics of the fluorocarbon coating composition. Additionally, the dispersant includes monomers that are commercially available and relatively inexpensive such that manufacturing fluorocarbon coating compositions that include the dispersant is not cost prohibitive. Since the dispersant has amine functionality, the dispersant also aids in dispersion of fluorocarbon resins. Further, since the dispersant has hydroxyl functionality, the dispersant enhances cross-linking with cross-linking agents in the fluorocarbon coating composition and contributes to uniform film formation.

### DETAILED DESCRIPTION OF THE INVENTION

The present invention includes a fluorocarbon coating composition and a dispersant for use in the fluorocarbon coating composition. The dispersant is typically used to aid in dispersion of fluorocarbon resins in the fluorocarbon coating composition. However, it is to be appreciated that the dispersant of the present invention can have applications beyond fluorocarbon coating compositions, such as in automotive coating compositions.

The fluorocarbon coating composition comprises a fluorocarbon resin, the dispersant, and a cross-linking agent reactive with the dispersant. The fluorocarbon coating composition may further comprise a solvent component and an additive component.

Suitable fluorocarbon resins for purposes of the present invention include polyvinylidine fluoride (PVDF), such as those sold under the trademark Kynar®, polyvinyl fluoride, polytetrafluoroethylene, copolymers of vinylidene fluoride and tetrafluoroethylene, such as those sold under the trademark Kynar® SL, a fluoroethylene/vinyl ester/vinyl ether sold under the trademark Fluonate®, proprietary vinylidene fluoride-based polymers also sold under the trademarks Kynat® 500 and Kynar® SL, and combinations thereof. The fluorocarbon resins typically have a weight average molecular weight of from 100,000 to 500,000 g/mol.

The fluorocarbon resins typically provide cured films formed from the fluorocarbon coating composition with excellent chemical and mechanical resistance and are typically useful in powder form. The fluorocarbon resins in powder form are typically insoluble in the solvent component in the fluorocarbon coating composition of the present invention, but are swelled by the solvent component, which can increase the viscosity of the fluorocarbon coating composition. The fluorocarbon resin is typically present in the fluorocarbon coating composition in an amount of from 30 to 99, more typically from 45 to 85, and most typically from 55 to 75 parts by weight based on 100 parts by weight of the fluorocarbon coating composition. In order to achieve optimal chemical and mechanical resistance for cured films formed from the fluorocarbon coating composition, it is desirable for the fluorocarbon resin to be present in the fluorocarbon coating composition in an amount of about 70 parts by weight based on 100 parts by weight of the fluorocarbon coating composition. However, when the fluorocarbon resin is present in an amount of greater than 70 parts by weight, manufacturing costs of the fluorocarbon coating composition typically significantly increase due to the high cost of the fluorocarbon resins.

The cross-linking agent of the fluorocarbon coating composition is reactive with the dispersant and provides covalent bonds between monomers to aid in cured film formation. The cross-linking agent may be an aminoplast resin, such as a melamine/formaldehyde resin or a melamine/urea resin. Other suitable cross-linking agents include isocyanates, blocked isocyanates, organosilanes, and glycol ureas. The cross-linking agent is generally selected to be substantially non-reactive with the dispersant at ambient temperatures, but to cross-link with the dispersant at an elevated temperature. The cross-linking agent is typically present in the fluorocarbon coating composition in an amount of from 0.2 to 10 parts by weight based on 100 parts by weight of the fluorocarbon coating composition.

The dispersant comprises a reaction product of a non-functional acrylic monomer, an amino-functional vinyl monomer, and a hydroxy-functional acrylic monomer. The dispersant has amine functionality from the amino-functional vinyl monomer to aid in dispersion of fluorocarbon resins in the fluorocarbon coating composition and has hydroxyl functionality from the hydroxy-functional acrylic monomer to enhance cross-linking with the cross-linking agent in the fluorocarbon coating composition, as set forth in more detail below.

The non-functional acrylic monomer may include alkacrylic monomers, alkyl acrylic monomers, and/or alkyl alkacrylic monomers. It is to be appreciated that the term non-functional means free from functional groups such as primary amines, secondary amines, tertiary amines, hydroxyls, phosphates, and sulfonyls. However, the non-functional acrylic monomer may include unsaturation. That is, the non-functional acrylic monomer may include a carbon-carbon double bond.

The non-functional acrylic monomer typically has a formula weight of from 86 to 200, more typically from 90 to 150, and most typically from 90 to 120 g/mol. The non-functional acrylic monomer may be represented by the general formula: 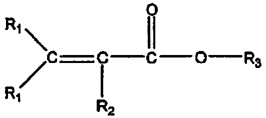 wherein R₁ and R₂ are the same or different and are each selected from —H and a C₁ to C₃ alkyl and R₃ is a C₁ to C₆ alkyl. The non-functional acrylic monomer is typically selected from the group of methyl methacrylate, ethyl acrylate, ethyl methacrylate, methyl acrylate, butyl acrylate, butyl methacrylate, and combinations thereof. It is to be appreciated that the non-functional acrylic monomer may also be selected from an isomer of butyl methacrylate, such as tert-butyl methacrylate. A suitable non-functional acrylic monomer, methyl methacrylate, is commercially available from BASF Corporation of Florham Park, New Jersey.

The non-functional acrylic monomer is typically present in the dispersant in an amount of from 50 to 99 parts by weight based on 100 parts by weight of the dispersant. Without intending to be limited by theory, the non-functional acrylic monomer is typically useful for providing a cured film formed from the fluorocarbon coating composition with weather resistance and toughness.

The amino-functional vinyl monomer typically has a formula weight of from 60 to 340, more typically from 80 to 240, and most typically from 90 to 140 g/mol. The amino-functional vinyl monomer is a vinyl monomer that is typically represented by the general structure: 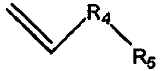 or 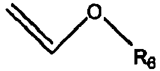 wherein R₄ is typically selected from the group of an aliphatic straight chain having from 1 to 20 carbon atoms, an aliphatic branched chain having from 1 to 20 carbon atoms, an aliphatic ring, and combinations thereof; and R₅ and R₆ are typically each independently selected from the same or different alkyl amine groups having from 1 to 20 carbon atoms or a heterocyclic ring having at least one nitrogen atom. More specifically, the amino-functional vinyl monomer is typically represented by the general structure: 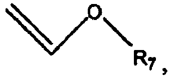 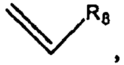 or 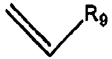 wherein R₇ and R₈ are typically each independently selected from the same or different alkyl amine groups having from 2 to 20 carbon atoms and R₉ is typically selected from a heterocyclic ring having at least one nitrogen atom. The amino-functional vinyl monomer may include at least one side group comprising a carbon, nitrogen, or oxygen atom. The amino-functional vinyl monomer is a vinyl monomer that may comprise a primary amino group and/or a secondary amino group. It is to be appreciated that the term vinyl is to be differentiated from the terms acrylate and methacrylate as represented by the general structures: 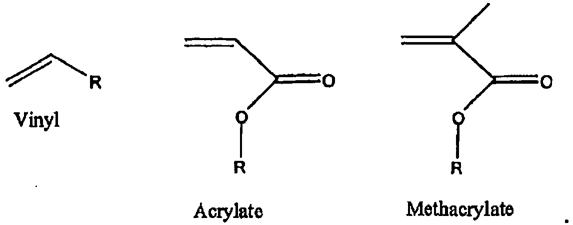 The amino-functional vinyl monomer is typically selected from the group of 1-vinyl imidazole, 4-vinyl pyridine, 1-vinyl-2-pyrrolidinone, amino propyl vinyl ether, and combinations thereof. A suitable amino-functional vinyl monomer, amino vinyl propyl ether, is commercially available from BASF Corporation of Florham Park, New Jersey.

The amino-functional vinyl monomer is typically present in the dispersant in an amount of from 0.2 to 20 parts by weight based on 100 parts by weight of the dispersant. The amino-functional acrylic monomer is typically useful for providing the dispersant with amine functionality. Without intending to be limited by theory, it is believed that amine functionality from the amino-functional vinyl monomer aids in dispersion of fluorocarbon resins in the fluorocarbon coating composition because extra electrons from the nitrogen of the amino group are attracted to a highly polar fluorine of the fluorocarbon resin. Additionally, in an embodiment where the amino-functional vinyl monomer is represented by the general structure: 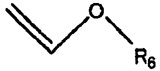 or 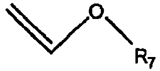 the oxygen group adjacent to the vinyl group withdraws electrons to enhance the reactivity of the amino-functional vinyl monomer. Since adequately dispersed fluorocarbon resins contribute to lowered viscosity and desired pigment wetting characteristics of the fluorocarbon coating composition, the fluorocarbon coating composition including the dispersant of the present invention is useful for applications requiring automated coating processes and uniform film thickness.

The hydroxy-functional acrylic monomer typically has an alkacrylic structure, an alkyl acrylic structure, or an alkyl alkacrylic structure. The hydroxy-functional acrylic monomer typically has a formula weight of from 100 to 200, more typically from 115 to 160, and most typically from 130 to 150 g/mol. The hydroxy-functional acrylic monomer may be represented by the general formula: 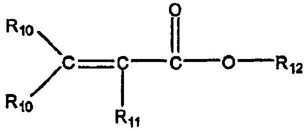 wherein R₁₀ and R₁₁ are the same or different and are each selected from -H and a C₁ to C₃ alkyl and R₁₂ is the residue of an alcohol having additional OH or beta-diketone functionality. The hydroxy-functional acrylic monomer is typically selected from the group of hydroxyethyl methacrylate, hydroxyethyl acrylate, hydroxypropyl methacrylate, hydroxypropyl acrylate, acetoacetoxyethyl methacrylate, and combinations thereof. A suitable hydroxy-functional acrylic monomer, hydroxyethyl methacrylate, is commercially available from BASF Corporation of Florham Park, New Jersey.

The hydroxy-functional acrylic monomer is typically present in the dispersant in an amount of from 0.5 to 20 parts by weight based on 100 parts by weight of the dispersant. The parts by weight of the non-functional acrylic monomer, the amino-functional vinyl monomer, and the hydroxy-functional acrylic monomer in total do not exceed 100 parts by weight of the dispersant. Without intending to be limited by theory, it is believed that the hydroxyl functionality of the hydroxy-functional acrylic monomer enhances cross-linking with cross-linking agents in the fluorocarbon coating composition by providing the dispersant with sites that are reactive with the cross-linking agent. Enhanced cross-linking contributes to uniform film formation and provides the cured film formed from the fluorocarbon coating composition with excellent hardness and durability.

The dispersant typically has a weight average molecular weight of from 25,000 to 40,000, more typically from 30,000 to 35,000 g/mol. The dispersant is typically present in the fluorocarbon coating composition in an amount of from 5 to 50 parts by weight based on 100 parts by weight of the fluorocarbon coating composition. The dispersant allows for a desired fluorocarbon resin content of the fluorocarbon coating composition while providing desired viscosity and pigment wetting characteristics of the fluorocarbon coating composition. Without intending to be limited by theory, it is believed that amine functionality from the amino-functional vinyl monomer of the dispersant aids in dispersion of fluorocarbon resins in the fluorocarbon coating composition because extra electrons from the nitrogen of the amine group are attracted to the highly polar fluorine of the fluorocarbon resin. Further, since the dispersant aids in dispersion of fluorocarbon resins in the fluorocarbon coating composition, viscosity and pigment wetting characteristics are typically optimized even at the desired fluorocarbon resin content. Since the dispersant comprises monomers that are commercially available and are relatively inexpensive, manufacturing the fluorocarbon coating composition comprising the dispersant is typically not cost prohibitive. It is to be appreciated that one objective of the present invention is to reduce or eliminate reliance on 3-(2-methacryloxyethyl)-2,2-spirocyclohexyl oxazolidine, MESO, for dispersant polymerization; however, it may still be used in reduced quantities. Other cyclo oxazolidines may also be substituted for MESO to reduce cost.

The solvent component of the fluorocarbon coating composition typically includes an organic solvent or a mixture of solvents. Suitable solvents include, but are not limited to, glycols, esters, ether-esters, glycol-esters, ether-alcohols, aliphatic hydrocarbons, aromatic hydrocarbons, phthalate plasticizers, and combinations thereof. Specific examples of suitable solvent components include Aromatic 100, Aromatic 150, butyl carbitol acetate, dibasic ester, methyl amyl ketone, and isophorone.

The additive component of the fluorocarbon coating composition may include a catalyst. The catalyst is typically used to promote curing of the fluorocarbon coating composition during cured film formation. Such catalysts are known in the art and typically include p-toluene sulfonic acid, methane sulfonic acid, nonylbenzene sulfonic acid, dinonyl-naphthalene sulfonic acid, dodecylbenzene sulfonic acid, phenyl acid phosphate, monobutyl maleate, butyl phosphate, nonoalkyl and dialkyl acid phosphates, hydroxy phosphate ester, and combinations thereof. Strong acid catalysts may be blocked, for example, with an amine. Other catalysts that may be useful in the fluorocarbon coating composition include Lewis acids, zinc salts, and tin salts. The catalyst is generally present in the fluorocarbon coating composition in an amount of from 0.1 to 5.0 parts by weight based on 100 parts by weight of the dispersant.

The additive component may also include a pigment. The pigment is typically included in the fluorocarbon coating composition for imparting color to the cured film formed from the fluorocarbon coating composition. Such pigments are typically known in the art and are selected by one skilled in the art according to desired color, durability, weather resistance, and chemical resistance. Suitable pigments include inorganic metal oxides, organic compounds, metal flake, micas, extender or fillet pigments, and corrosion-inhibitive pigments such as chromates, silicas, silicates, phosphates, molybdates, and combinations thereof.

In one embodiment, the additive component does not include the pigment and the fluorocarbon coating composition is typically useful as a clearcoat. The clearcoat is typically applied over a cured film formed from a color coat to impart sheen to the cured film.

The additive component of the fluorocarbon coating composition may also include any additive known in the art. Suitable additives include, but are not limited to, initiators, fillers, UV inhibitors, stabilizers, wax solutions, defoamers, and antioxidants.

The subject invention also provides a fluorocarbon coating system. The fluorocarbon coating system comprises a substrate and the fluorocarbon coating composition disposed on the substrate. The substrate may be any suitable substrate known in the art such as metal and composite. The substrate is typically metal. The fluorocarbon coating composition may also be disposed on a substrate that has first been coated with a primer coating or treated by other methods known in the art such as electrocoating. Suitable primer coatings include acrylics, polyesters, and epoxies crosslinked with melamines, blocked isocyanates, and phenolics.

The fluorocarbon coating composition may be applied to the substrate by a variety of coating processes, such as coil coating, reverse roll coating, spray coating, extrusion coating, brush coating, and/or dip coating. However, the fluorocarbon coating composition of the subject invention is typically formulated for and useful in coil coating processes. Since the fluorocarbon coating composition comprises the dispersant and has desired viscosity even at the desired fluorocarbon resin content of the fluorocarbon coating composition, the fluorocarbon coating composition is useful for applications requiring automated coating processes and uniform film thickness. In one type of coating process, a reverse roll coil coating process, the fluorocarbon coating composition is typically applied at a peak metal temperature (PMT) of from 400 to 500 °F at a film thickness of from 0.2 to 1.2, more typically 0.5 to 0.9 mil. A dwell time at PMT typically ranges from 10 seconds to 5 minutes. In another type of coating process, spray coating, the dwell time at a PMT of from 400 to 500 °F typically ranges from 5 to 20 minutes for film thickness of from 1.2 to 1.4 mil. In another type of coating process, extrusion coating, the dwell time at a PMT of from 200 to 500 °F typically ranges from 5 to 20 minutes for film thickness of from 0.3 to 3 mil. The fluorocarbon coating system of the present invention is typically useful for applications such as building panels, roofing panels, appliance housings, and automotive components.

The fluorocarbon coating composition typically has a curing temperature of from 150 to 315, more typically from 200 to 260 ° C. The fluorocarbon coating composition is typically cured to form the cured film by baking in an oven, although the fluorocarbon coating composition may be cured by any method known in the art, such as by exposure to an open heat source.

### EXAMPLES

The following examples are merely intended to illustrate the invention and are not to be viewed in any way as limiting to the scope of the invention.

A dispersant is formed according to the formulations listed in Table 1. The amounts in Table 1 are in grams.

**Table 1: Dispersant Formulations**

| | **Ex. 1** | **Ex. 2** | **Ex. 3** | **Comp. Ex. 1** |
|---|---|---|---|---|
| Initiator | 10.9 | 10.9 | 10.9 | 14.3 |
| Non-Functional Acrylic Monomer | 772.4 | 780.8 | 774 | 821.4 |
| Amino-Functional Vinyl Monomer | 25.2 | 16.8 | 23.5 | 0.0 |
| Hydroxy-functional Acrylic Monomer | 42.0 | 42.0 | 42.0 | 45.1 |
| 15% 3-(2-methacryloxyethyl)-2,2-spirocyclohexyl oxazolidine (MESO)/ 85% methyl methacrylate solution | 0.0 | 25.2 | 0.0 | 31.5 |
| Solvent | 1450.0 | 1424.4 | 1450.0 | 1388.1 |
| Total | 2300.5 | 2300.1 | 2300.4 | 2300.4 |

In Example 1, the non-functional acrylic monomer is methyl methacrylate, the amino-functional vinyl monomer is amino propyl vinyl ether, and the hydroxy-functional acrylic monomer is hydroxyethyl methacrylate. The initiator is Vazo^{®} 67, commercially available from DuPont of Wilmington, Delaware. A mixture of Aromatic 100 (534 grams) and methyl n-amyl ketone (MAK) (347 grams) is charged to a reactor equipped with an agitator, condenser, thermometer, inert gas inlet, and addition funnel. The reactor is inerted with nitrogen and the mixture is heated to 110° C. During a monomer addition, a premix of the non-functional acrylic monomer, the amino-functional vinyl monomer, the hdroxy-functional acrylic monomer, and 7 grams of Aromatic 100 is produced in an addition tank and added to the reactor over a 3-hour period while maintaining the temperature at 110°C. In addition to the premix, 4.6 grams of Vazo^{®} 67 and 34.5 grams of MAK are also added over the 3-hour period to complete the monomer addition.

After the monomer addition is complete, the addition tank contents are flushed with 34.5 grams of MAK and the addition tank contents are held at 110°C for 30 minutes. Next, 6.3 grams of Vazo^{®} 67 and 34.5 grams of MAK are added in increments over 90 minutes. The addition tank is flushed with 23 grams of MAK to the reactor. The dispersant is then held for 30 minutes at 110°C and cooled.

The resulting dispersant has a solids content of 38%, an amine value of 16.6 (mg KOH/gram resin solids), viscosity of Z (Gardner-Holdt bubble) at 25°C, and weight per gallon of 8.50 lb.

In Example 2, 50% of the MESO by molar ratio is removed and replaced by the reaction of the amino-functional vinyl monomer with the non-functional acrylic monomer and the hydroxy-functional acrylic monomer. The non-functional acrylic monomer is methyl methacrylate, the amino-functional vinyl monomer is amino propyl vinyl ether, and the hydroxy-functional acrylic monomer is hydroxyethyl methacrylate. The initiator is Vazo^{®} 67, commercially available from DuPont of Wilmington, Delaware. A mixture of Aromatic 100 (509 grams) and methyl n-amyl ketone (MAK) (347 grams) is charged to a reactor equipped with an agitator, condenser, thermometer, inert gas inlet, and addition funnel. The reactor is flushed with nitrogen and the mixture is heated to 110 °C. During a monomer addition, a premix of the non-functional acrylic monomer, the amino-functional vinyl monomer, the hydroxy-functional acrylic monomer, MESO, and 7 grams of Aromatic 100 is produced in an addition tank and added to the reactor over a 3-hour period while maintaining the temperature at 110 °C. In addition to the premix, 4.6 grams of Vazo^{®} 67 and 34.5 grams of MAK are also added over the 3-hour period to complete the monomer addition.

After the monomer addition is complete, the addition tank contents are flushed with 34.5 grams of MAK and the addition tank contents are held at 110°C for 30 minutes. Next, 6.3 grams of Vazo^{®} 67 and 34.5 grams of MAK are added in increments over 90 minutes and held at 110 °C for 30 minutes. The addition tank is flushed with 23 grams of MAK to the reactor. The dispersant is then held for 30 minutes at 110°C and cooled.

The resulting dispersant has a solids content of 38%, an amine value of 17.7 (mg KOH/gram resin solids), viscosity of Z1 (Gardner-Holdt bubble) at 25°C, and weight per gallon of 8.51 lbs.

In Example 3, the non-functional acrylic monomer is 772.3 grams of methyl methacrylate and 1.7 grams of butyl methacrylate, the amino-functional vinyl monomer is 1-vinyl imidazole, and the hydroxy-functional acrylic monomer is hydroxypropyl acrylate. The initiator is Vazo^{®} 67, commercially available from DuPont of Wilmington, Delaware. A mixture of Aromatic 100 (534 grams) and methyl n-amyl ketone (MAK) (347 grams) is charged to a reactor equipped with an agitator, condenser, thermometer, inert gas inlot, and addition funnel. The reactor is flushed with nitrogen and the mixture is heated to about 110°C. During a monomer addition, a premix of the non-functional acrylic monomer, the amino-functional vinyl monomer, the hydroxy-functional acrylic monomer, and 7 grams of Aromatic 100 is produced in an addition tank and added to the reactor over a 3-hour period maintaining the temperature at 110°C. In addition to the premix, 4.6 grams of Vazo^{®} 67 and 34.5 grams of MAK are also added over the 3-hour period to complete the monomer addition.

After the monomer addition is complete, the addition tank contents are flushed with 34.5 grams of MAK and the addition tank contents are held at 110°C for 30 minutes. Next, 6.3 grams of Vazo^{®} 67 and 34.5 grams of MAK are added in increments over 90 minutes and held at 110°C for 30 minutes after the monomer addition. The addition tank is flushed with 23 grams of MAK to the reactor. The dispersant is then held at 110 °C for 30 minutes, cooled, and filtered.

The resulting dispersant has a solids content of 38 %, an amine value of 16.7 (mg KOH/gram resin solids), viscosity of Z1 (Gardner-Holdt bubble) at 25°C, and weight per gallon of 8.51 lbs.

In Comparative Example 1, the non-functional acrylic monomer is methyl methacrylate, the hydroxy-functional acrylic monomer is hydroxyethyl methacrylate, and the initiator is Vazo^{®} 67, commercially available from DuPont of Wilmington, Delaware. A mixture of isophorone (138 grams), xylene (572 grams), and propylene carbonate (552 grams) is charged to a reactor equipped with an agitator, condenser, thermometer, inert gas inlet, and addition funnel. The reactor is flushed with nitrogen and the mixture is heated to 108°C. During a monomer addition, a premix of the methyl methacrylate, 3-(2-methacryloxyethyl)-2,2-spirocyclohexyl oxazolidine, hydroxyethyl methacrylate, and 6.9 grams of Vazo 67 is produced in an addition tank and added to the reactor over a 3-hour period maintaining the temperature at 108°C to complete the monomer addition.

After the monomer addition is complete, the reactor contents are held at 108 °C for 30 minutes. The reactor contents are then cooled to 98 °C, and the conversion of monomers to comparative dispersant is completed by making four additions, one every 30 minutes, each consisting of 1.85 grams of Vazo 67 and 4.85 grams of xylene. After a final post-cook of 40 minutes, the comparative dispersant is cooled and packaged.

The resulting comparative dispersant has a solids content of 42 %, an amine value of 13 (mg KOH/gram resin solids), viscosity of Z (Gardner-Holdt bubble) at 25 °C, and weight per gallon of 8.8 lbs.

Each of three dispersants is incorporated into a fluorocarbon coating composition according to the formulations listed in Table 2. The amounts in Table 2 are listed in grams.

**Table 2: Fluorocarbon Coating Composition Formulations**

| | Ex. 1 | Ex. 2 | Comp. Ex. 1 |
|---|---|---|---|
| Fluorocarbon Resin | 24.0 | 25.0 | 26.0 |
| Cross-linking Agent | 0.7 | 0.7 | 0.7 |
| Dispersant | 10.4 | 11.4 | 11.4 |
| Pigment | 16.1 | 17.1 | 17.1 |
| Solvent | 48.0 | 45.0 | 44.0 |
| Additive Component - Catalyst | 0.1 | 0.1 | 0.1 |
| Additive Component - Defoamer | 0.3 | 0.3 | 0.3 |
| Additive Component - Wax Solution | 0.2 | 0.2 | 0.2 |
| Additive Component - Antioxidant | 0.2 | 0.2 | 0.2 |

In Example 1, a pigment dispersion is formed by dispersing 16.1 g of titanium oxide pigment in a mixture of 5 g dispersant and 20 g of solvent (isophorone). The dispersant is reduced with the solvent and powdered titanium dioxide pigment is added under agitation. The pigment is completely dispersed using a high-speed blade. The dispersant, solvent, and pigment mixture is then passed through a media mill to achieve complete dispersion. A fluorocarbon coating base is prepared by dispersing 23.9 g of the fluorocarbon resin (polyvinylidene difluoride (PVDF)) in 5.4 g of the dispersant and 20 g of solvent. Again, the dispersant is reduced with solvent, the powdered PVDF is added under agitation, and the PVDF is completely dispersed using a high-speed blade.

An intermediate base is prepared by adding the remaining components into the fluorocarbon coating base. For example, 0.1 g of acid catalyst and 0.7 g of melamine crosslinking agent are added to the fluorocarbon coating base. Additionally, 0.3 g of defoamer, 0.2 g of wax solution, and 0.2 g of antioxidant are added to the fluorocarbon coating base.

The fluorocarbon coating composition is completed by blending the pigment dispersion and the fluorocarbon coating base and adjusting the viscosity with the remaining 8.2 g of solvent. Various tests, such as viscosity and density, are run on the final fluorocarbon coating composition to ensure its compositional integrity.

In Example 2, a pigment dispersion is formed by dispersing 17.1 g of titanium oxide pigment in a mixture of 5 g dispersant and 20 g of solvent. The dispersant is reduced with the solvent and powdered titanium dioxide pigment is added under agitation. The pigment is completely dispersed using a high-speed blade. The dispersant, solvent, and pigment mixture is then passed through a media mill to achieve complete dispersion. A fluorocarbon coating base is prepared by dispersing 25 g of the fluorocarbon resin (polyvinylidene difluoride (PVDF)) in 5.4 g of the dispersant and 20 g of solvent. Again, the dispersant is reduced with solvent and the powdered PVDF is added under agitation and the PVDF is completely dispersed using a high-speed blade.

An intermediate base is prepared by adding the remaining components into the fluorocarbon coating base. For example, 0.1 g of acid catalyst and 0.7 g of melamine crosslinking agent are added to the fluorocarbon coating base. Likewise, 0.3 g of defoamer, 0.2 g of wax solution, and 0.2 g of antioxidant are added to the fluorocarbon coating base.

The fluorocarbon coating composition is completed by blending the pigment dispersion and the fluorocarbon coating base and adjusting the viscosity with the remaining 7.1 g of solvent. Various tests, such as viscosity and density, are run on the final fluorocarbon coating composition to ensure its compositional integrity.

In Comparative Example 1, the pigment dispersion is formed from the dispersant, the pigment, and the solvent. Next, the fluorocarbon coating base is formed from the fluorocarbon resin, 5.4 g of the dispersant, and 20 g of the solvent. The remaining components are added to the fluorocarbon coating base. The cross-linking agent is hexamethoxymethyl melamine.

The fluorocarbon coating composition is completed by blending the pigment dispersion and the fluorocarbon coating base and adjusting the viscosity with the remaining solvent. Various tests, such as viscosity and density, are run on the final fluorocarbon coating composition to ensure its compositional integrity.

The fluorocarbon coating compositions of Examples 1 and 2 and Comparative Example 1 are applied to steel substrates and baked for 55 seconds at 305 ° C to yield 0.75 - 0.85 mil (0.019 - 0.022 mm) cured films. To measure uniform film formation, methylethyl ketone (MEK) resistance of the cured films is determined by the number of double rubs until cured film failure. Example 1 performs well for 200 + rubs, Example 2 performs well for 200+ rubs, and Comparative Example 1 performs well for 100+ rubs. These results indicate that the fluorocarbon coating compositions of Examples 1 and 2 perform at least as well as, if not better than, the fluorocarbon coating composition of Comparative Example 1 that relies upon MESO and is free from amine functionality from the amino-functional vinyl monomer. The fluorocarbon coating compositions of Examples 1 and 2 exhibit uniform film formation because the dispersants of Examples 1 and 2 have amine functionality from the amino-functional vinyl monomer and hydroxyl functionality from the hydroxy-functional acrylic monomer. Because the dispersants of Examples 1 and 2 have amine functionality, the dispersants aid in dispersion of fluorocarbon resins in the fluorocarbon coating composition. Since adequately dispersed fluorocarbon resins contribute to lowered viscosity and desired pigment wetting characteristics of the fluorocarbon coating composition, the fluorocarbon coating compositions of Examples 1 and 2 including the dispersant of the present invention are useful for applications requiring automated coating processes and uniform film thickness. Since the dispersants of Examples 1 and 2 have hydroxyl functionality, the dispersants enhance cross-linking with cross-linking agents in the fluorocarbon coating compositions and contribute to uniform film formation. As discussed above, MESO is becoming increasingly difficult and expensive to obtain. Therefore, the fluorocarbon coating compositions of Examples 1 and 2 provide an alternate fluorocarbon coating composition that performs well and that is less expensive to manufacture than the fluorocarbon coating composition of Comparative Example 1.

The invention has been described in an illustrative manner, and it is to be understood that the terminology which has been used is intended to be in the nature of words of description rather than of limitation. Obviously, many modifications and variations of the present invention are possible in light of the above teachings. The invention may be practiced otherwise than as specifically described.

## Claims

1. A dispersant for use in a fluorocarbon coating composition, said dispersant comprising a reaction product of:
a non-functional acrylic monomer;
an amino-functional vinyl monomer; and
a hydroxy-functional acrylic monomer;
wherein said dispersant has amine functionality from said amino-functional vinyl monomer to aid in dispersion of fluorocarbon resins in the fluorocarbon coating composition and has hydroxyl functionality from said hydroxy-functional acrylic monomer to enhance cross-linking with cross-linking agents in the fluorocarbon coating composition.

2. A dispersant as set forth in claim 1 wherein said amino-functional vinyl monomer is represented by the general structure: 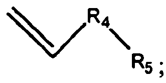 or 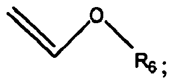
wherein R₄ is selected from the group of an aliphatic straight chain having from 1 to 20 carbon atoms, an aliphatic branched chain having from 1 to 20 carbon atoms, an aliphatic ring, and combinations thereof; and
R₅ and R₆ are each independently selected from the same or different alkyl amine groups having from 1 to 20 carbon atoms or a heterocyclic ring having at least one nitrogen atom.

3. A dispersant as set forth in claim 1 wherein said amino-functional vinyl monomer is represented by the general structure: 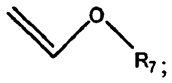 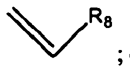 or 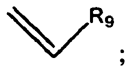 wherein R₇ and R₈ are each independently selected from the same or different alkyl amine groups having from 2 to 20 carbon atoms and R₉ is selected from a heterocyclic ring having at least one nitrogen atom.

4. A dispersant as set forth in any preceding claim wherein said amino-functional vinyl monomer comprises at least one side group comprising a carbon, nitrogen, or oxygen atom.

5. A dispersant as set forth in any preceding claim wherein said amino-functional vinyl monomer is selected from the group of 1-vinyl imidazole, 4-vinyl pyridine, 1-vinyl-2-pyrrolidinone, amino propyl vinyl ether, and combinations thereof.

6. A dispersant as set forth in any preceding claim wherein said amino-functional vinyl monomer is present in said dispersant in an amount of from 0.2 to 20 parts by weight based on 100 parts by weight of said dispersant.

7. A dispersant as set forth in any preceding claim wherein said hydroxy-functional monomer has an alkacrylic, alkylacrylic, or alkyl alkacrylic structure.

8. A dispersant as set forth in any preceding claim wherein said hydroxy-functional monomer is selected from the group of hydroxyethyl methacrylate, hydroxyethyl acrylate, hydroxypropyl methacrylate, hydroxypropyl acrylate, acetoacetoxyethyl methacrylate, and combinations thereof.

9. A dispersant as set forth in any preceding claim wherein said hydroxy-functional monomer is present in said dispersant in an amount of from 0.5 to 20 parts by weight based on 100 parts of said dispersant.

10. A dispersant as set forth in any preceding claim wherein said non-functional acrylic monomer is selected from the group of methyl methacrylate, ethyl acrylate, ethyl methacrylate, methyl acrylate, butyl acrylate, butyl methacrylate, and combinations thereof.

11. A dispersant as set forth in any preceding claim wherein said non-functional acrylic monomer is present in said dispersant in an amount of from 50 to 99 parts by weight based on 100 parts by weight of said dispersant.

12. A dispersant as set forth in any preceding claim having a weight average molecular weight of from 25,000 to 40,000 g/mol.

13. A fluorocarbon coating composition comprising: a fluorocarbon resin; a dispersant as set forth in any one of claims 1-12; and a cross-linking agent reactive with said dispersant.

14. A fluorocarbon coating composition as set forth in claim 13 wherein said dispersant is present in said fluorocarbon coating composition in an amount of from 5 to 50 parts by weight based on 100 parts of said fluorocarbon coating composition and said fluorocarbon resin is present in said fluorocarbon coating composition in an amount of from 30 to 99 parts by weight based on 100 parts of said fluorocarbon coating composition.

15. A fluorocarbon coating system comprising: a substrate; and a fluorocarbon coating composition as set forth in one of claims 13 and 14 disposed on said substrate.

## Patentansprüche

1. Dispergiermittel zur Verwendung in einer Fluorcarbon-Beschichtungszusammensetzung, wobei das Dispergiermittel ein Umsetzungsprodukt von:
einem nichtfunktionellen Acrylmonomer;
einem aminofunktionellen Vinylmonomer und einem hydroxyfunktionellen Acrylmonomer umfasst; wobei das Dispergiermittel Aminfunktionalität von dem aminofunktionellen Vinylmonomer zur Unterstützung der Dispergierung von Fluorcarbonharzen in der Fluorcarbon-Beschichtungszusammensetzung und Hydroxylfunktionalität von dem hydroxyfunktionellen Acrylmonomer zur Verbesserung der Vernetzung mit Vernetzern in der Fluorcarbon-Beschichtungszusammensetzung aufweist.

2. Dispergiermittel nach Anspruch 1, wobei das aminofunktionelle Vinylmonomer durch die folgende allgemeine Struktur wiedergegeben wird: 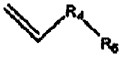 oder 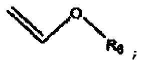 worin R₄ aus der Gruppe einer aliphatischen geraden Kette mit 1 bis 20 Kohlenstoffatomen, einer aliphatischen verzweigten Kette mit 1 bis 20 Kohlenstoffatomen, einem aliphatischen Ring und Kombinationen davon ausgewählt ist und
R₅ und R₆ jeweils unabhängig voneinander aus den gleichen oder verschiedenen Alkylamingruppen mit 1 bis 20 Kohlenstoffatomen oder einem heterocyclischen Ring mit mindestens einem Stickstoffatom ausgewählt sind.

3. Dispergiermittel nach Anspruch 1, wobei das aminofunktionelle Vinylmonomer durch die folgende allgemeine Struktur wiedergegeben wird: 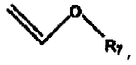 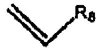 oder 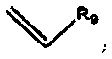 worin R₇ und R₈ jeweils unabhängig voneinander aus den gleichen oder verschiedenen Alkylamingruppen mit 2 bis 20 Kohlenstoffatomen ausgewählt sind und R₉ aus einem heterocyclischen Ring mit mindestens einem Stickstoffatom ausgewählt ist.

4. Dispergiermittel nach einem der vorhergehenden Ansprüche, wobei das aminofunktionelle Vinylmonomer mindestens eine Seitengruppe mit einem Kohlenstoff-, Stickstoff- oder Sauerstoffatom umfasst.

5. Dispergiermittel nach einem der vorhergehenden Ansprüche, wobei das aminofunktionelle Vinylmonomer aus der Gruppe 1-Vinylimidazol, 4-Vinylpyridin, 1-Vinyl-2-pyrrolidinon, Aminopropylvinylether und Kombinationen davon ausgewählt ist.

6. Dispergiermittel nach einem der vorhergehenden Ansprüche, wobei das aminofunktionelle Vinylmonomer in dem Dispergiermittel in einer Menge von 0,2 bis 20 Gewichtsteilen, bezogen auf 100 Gewichtsteile des Dispergiermittels, vorliegt.

7. Dispergiermittel nach einem der vorhergehenden Ansprüche, wobei das hydroxyfunktionelle Monomer eine Alkacryl-, Alkylacryl- oder Alkylalkacryl-Struktur aufweist.

8. Dispergiermittel nach einem der vorhergehenden Ansprüche, wobei das hydroxyfunktionelle Monomer aus der Gruppe Hydroxyethylmethacrylat, Hydroxyethylacrylat, Hydroxypropylmethacrylat, Hydroxypropylacrylat, Acetoacetoxyethylmethacrylat und Kombinationen davon ausgewählt ist.

9. Dispergiermittel nach einem der vorhergehenden Ansprüche, wobei das hydroxyfunktionelle Monomer in dem Dispergiermittel in einer Menge von 0,5 bis 20 Gewichtsteilen, bezogen auf 100 Teile des Dispergiermittels, vorliegt.

10. Dispergiermittel nach einem der vorhergehenden Ansprüche, wobei das nichtfunktionelle Acrylmonomer aus der Gruppe Methylmethacrylat, Ethylacrylat, Ethylmethacrylat, Methylacrylat, Butylacrylat, Butylmethacrylat und Kombinationen davon ausgewählt ist.

11. Dispergiermittel nach einem der vorhergehenden Ansprüche, wobei das nichtfunktionelle Acrylmonomer in dem Dispergiermittel in einer Menge von 50 bis 99 Gewichtsteilen, bezogen auf 100 Gewichtsteile des Dispergiermittels, vorliegt.

12. Dispergiermittel nach einem der vorhergehenden Ansprüche mit einem gewichtsmittleren Molekulargewicht von 25.000 bis 40.000 g/mol.

13. Fluorcarbon-Beschichtungszusammensetzung, umfassend: ein Fluorcarbonharz; ein Dispergiermittel nach einem der Ansprüche 1 bis 12 und einen Vernetzer, der gegenüber dem Dispergiermittel reaktiv ist.

14. Fluorcarbon-Beschichtungszusammensetzung nach Anspruch 13, wobei das Dispergiermittel in der Fluorcarbon-Beschichtungszusammensetzung in einer Menge von 5 bis 50 Gewichtsteilen, bezogen auf 100 Teile der Fluorcarbon-Beschichrungszusammensetzung, vorliegt und das Fluorcarbonharz in der Fluorcarbon-Beschichtungszusammensetzung in einer Menge von 30 bis 99 Gewichtsteilen, bezogen auf 100 Teile der Fluorcarbon-Beschichtungszusammensetzung, vorliegt.

15. Fluorcarbon-Beschichtungssystem, umfassend: ein Substrat und eine auf dem Substrat angeordnete Fluorcarbon-Beschichtungszusammensetzung nach einem der Ansprüche 13 und 14.

## Revendications

1. Dispersant à utiliser dans une composition de revêtement fluorocarbonée, ledit dispersant comprenant le produit de réaction :
d'un monomère acrylique non fonctionnel ;
d'un monomère vinylique aminofonctionnel ; et
d'un monomère acrylique hydroxyfonctionnel ;
ledit dispersant possédant une fonctionnalité amine provenant dudit monomère vinylique aminofonctionnel pour faciliter la dispersion de résines fluorocarbonées dans la composition de revêtement fluorocarbonée, et possédant une fonctionnalité hydroxyle provenant dudit monomère acrylique hydroxyfonctionnel pour améliorer la réticulation avec des agents de réticulation dans la composition de revêtement fluorocarbonée.

2. Dispersant selon la revendication 1 dans lequel ledit monomère vinylique aminofonctionnel est représenté par la structure générale : 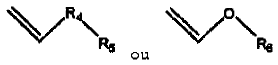
dans laquelle R₄ est choisi dans le groupe constitué par une chaîne aliphatique linéaire portant 1 à 20 atomes de carbone, une chaîne aliphatique ramifiée portant 1 à 20 atomes de carbone, un cycle aliphatique, et leurs combinaisons ; et
R₅ et R₆ sont choisis, chacun indépendamment, parmi des groupes alkylamino identiques ou différents portant 1 à 20 atomes de carbone et les hétérocycles portant au moins un atome d'azote.

3. Dispersant selon la revendication 1 dans lequel ledit monomère vinylique aminofonctionnel est représenté par la structure générale : 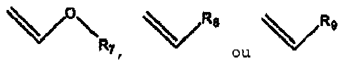 dans laquelle R₇ et R₈ sont choisis, chacun indépendamment, parmi des groupes alkylamino identiques ou différents portant 2 à 20 atomes de carbone, et R₉ est choisi parmi les hétérocycles portant au moins un atome d'azote.

4. Dispersant selon l'une quelconque des revendications précédentes dans lequel ledit monomère vinylique aminofonctionnel comporte au moins un groupe latéral comprenant un atome de carbone, d'azote ou d'oxygène.

5. Dispersant selon l'une quelconque des revendications précédentes dans lequel ledit monomère vinylique aminofonctionnel est choisi dans le groupe constitué par le 1-vinylimidazole, la 4-vinylpyridine, la 1-vinyl-2-pyrrolidinone, l'éther aminopropylvinylique, et leurs combinaisons.

6. Dispersant selon l'une quelconque des revendications précédentes, ledit monomère vinylique aminofonctionnel étant présent dans ledit dispersant dans une quantité de 0,2 à 20 parties en poids pour 100 parties en poids dudit dispersant.

7. Dispersant selon l'une quelconque des revendications précédentes dans lequel ledit monomère hydroxyfonctionnel possède une structure alkacrylique, une structure alkylacrylique, ou une structure alkyl-alkacrylique.

8. Dispersant selon l'une quelconque des revendications précédentes dans lequel ledit monomère hydroxyfonctionnel est choisi dans le groupe constitué par le méthacrylate d'hydroxyéthyle, l'acrylate d'hydroxyéthyle, le méthacrylate d'hydroxypropyle, l'acrylate d'hydroxypropyle, le méthacrylate d'acétoacétoxyéthyle, et leurs combinaisons.

9. Dispersant selon l'une quelconque des revendications précédentes, ledit monomère hydroxyfonctionnel étant présent dans ledit dispersant dans une quantité de 0,5 à 20 parties en poids pour 100 parties en poids dudit dispersant.

10. Dispersant selon l'une quelconque des revendications précédentes dans lequel ledit monomère acrylique non fonctionnel est choisi dans le groupe constitué par le méthacrylate de méthyle, l'acrylate d'éthyle, le méthacrylate d'éthyle, l'acrylate de méthyle, l'acrylate de butyle, le méthacrylate de butyle, et leurs combinaisons.

11. Dispersant selon l'une quelconque des revendications précédentes, ledit monomère acrylique non fonctionnel étant présent dans ledit dispersant dans une quantité de 50 à 99 parties en poids pour 100 parties en poids dudit dispersant.

12. Dispersant selon l'une quelconque des revendications précédentes ayant un poids moléculaire moyen en poids de 25 000 à 40 000 g/mol.

13. Composition de revêtement fluorocarbonée comprenant : une résine fluorocarbonée ; un dispersant selon l'une quelconque des revendications 1 à 12 ; et un agent de réticulation réactif avec ledit dispersant.

14. Composition de revêtement fluorocarbonée selon la revendication 13, ledit dispersant étant présent dans ladite composition de revêtement fluorocarbonée dans une quantité de 5 à 50 parties en poids pour 100 parties en poids de ladite composition de revêtement fluorocarbonée, et ladite résine fluorocarbonée étant présente dans ladite composition de revêtement fluorocarbonée dans une quantité de 30 à 99 parties en poids pour 100 parties en poids de ladite composition de revêtement fluorocarbonée.

15. Système de revêtement fluorocarboné comprenant : un substrat ; et une composition de revêtement fluorocarbonée selon l'une des revendications 13 et 14 disposée sur ledit substrat.
